# EUROPÄISCHE PATENTSCHRIFT

(11) **EP 1 130 296 B1**
(45) Veröffentlichungstag und Bekanntmachung des Hinweises auf die Patenterteilung: **16.04.2003**
(21) Anmeldenummer: 01103134.1
(22) Anmeldetag: 10.02.2001
(51) Int. Cl.: F16K 5/06

(54) **Absperrarmatur**
Closing valve
Soupape d'arrêt

(30) Priorität: 04.03.2000 DE 10010716
(43) Veröffentlichungstag der Anmeldung: 05.09.2001
(73) Patentinhaber: HONEYWELL AG, 63067 Offenbach am Main (DE)
(72) Erfinder: Pietsch, Jürgen, 44581 Castrop-Rauxel (DE)
(74) Vertreter: Fritz, Edmund Lothar, Dipl.-Chem.

(56) Entgegenhaltungen:
- EP-A- 0 112 977
- EP-A- 0 280 291
- EP-A- 0 458 980
- DE-A- 1 650 435
- DE-A- 2 539 000
- US-A- 4 577 662
- PATENT ABSTRACTS OF JAPAN vol. 005, no. 119 (M-081), 31. Juli 1981 (1981-07-31) & JP 56 059067 A (TAIMEI KINZOKU KOGYO KK), 22. Mai 1981 (1981-05-22)

## Beschreibung

Die vorliegende Erfindung bezieht sich auf eine Absperrarmatur nach dem Gattungsbegriff des Patentanspruches 1. Insbesondere bezieht sich die vorliegende Erfindung auf einen Kugelhahn.

Derartige Armaturen werden vermehrt in Trinkwasserinstallationen eingesetzt. Sie haben jedoch einen Nachteil, daß sich zwischen dem Absperrorgan und dem Gehäuse ein Totraum befindet, in dem kein Wasseraustausch stattfindet, so daß sich Keime bilden können. Hinsichtlich druckschriftlichen Standes der Technik wird verwiesen auf DE 32 48 704 A1 und EP-A-458980. Dort ist eine Absperrarmatur beschrieben, deren Totraum über einen Nebenfluß durchspült wird.

Aufgabe der vorliegenden Erfindung ist es, derartige unhygienische Zustände zu vermeiden.

Die Lösung dieser Aufgabe gelingt gemäß den kennzeichnenden Merkmalen der unabhängigen Ansprüche. Weitere vorteilhafte Ausgestaltungen der erfindungsgemäßen Absperrarmatur sind den abhängigen Ansprüchen entnehmbar.

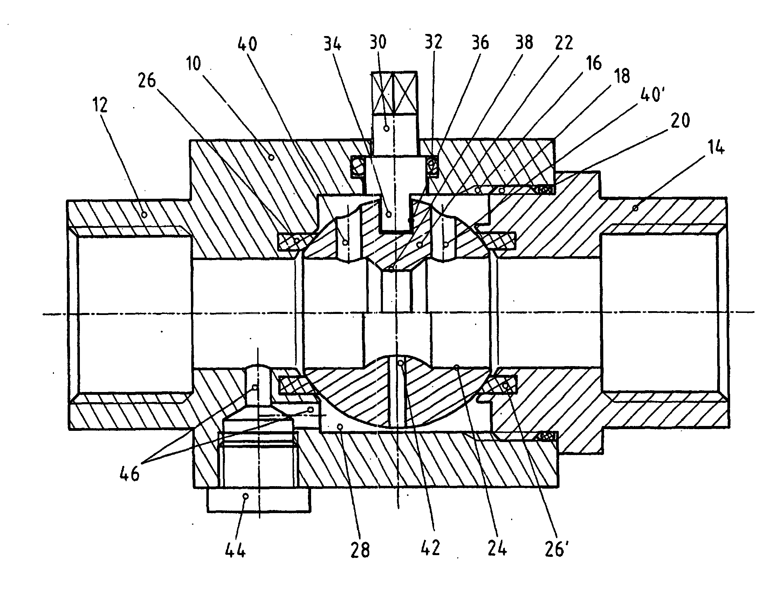

Anhand der einzigen Figur der beiliegenden Zeichnung seien im folgenden Ausführungsbeispiele der Erfindung erläutert. Diese einzige Figur zeigt oberhalb der Symmetrielinie ein erstes Ausführungsbeispiel der Erfindung und unterhalb der Symmetrielinie ein zweites Ausführungsbeispiel der Erfindung. Die Erfindung wird anhand eines Kugelhahns beschrieben, obgleich der Erfindungsgedanke auch bei anderen Absperrarmaturen anwendbar ist, bei denen sich zwischen einem Schließkörper und dem Gehäuse ein Totraum befindet, in den Wasser auf Grund mangelhafter Abdichtung eintreten kann.

Gemäß der einzigen Figur umfaßt der dargestellte Kugelhahn ein Gehäuse 10 mit einem angeformten Eingangs-Anschlußstutzen 12 und einem getrennten Ausgangs-Anschlußstutzen 14, der in ein Innengewinde 16 des Gehäuses 10 mit einem entsprechenden Außengewinde 18 unter Zwischenfügung einer O-Ringdichtung 20 eingeschraubt ist. Eine Kugel 22 weist eine Durchgangsöffnung 24 auf und wird in das Gehäuse 10 eingesetzt, bevor der Ausgangs-Anschlußstutzen 14 in das Gehäuse 10 eingeschraubt wird. Dichtungen 26, 26' dichten die Kugel 22 gegen das Gehäuse 10 und einen zwischen der Kugel 22 und dem Gehäuse 10 befindlichen Totraum 28 ab.

Eine Spindel 30 ist - abgedichtet durch einen O-Ring 32 - durch das Gehäuse 10 geführt und greift mit einem Mehrkant 34 in eine entsprechende Ausnehmung 36 der Kugel 22 ein. Die Kugel 22 weist in ihrer Durchgangsöffnung 24 eine Verengung 38 auf, die als Drosselblende wirkt, vor der sich eine Druckerhöhung des durchfließenden Mediums und hinter der sich eine Druckerniedrigung des durchfließenden Mediums ergibt. Parallel zur Drehachse der Kugel 22 ausgerichtete Bohrungen 40, 40' verbinden die Durchgangsöffnung 24 vor und hinter der Drosselblende 38 mit dem Totraum 28, was zur Folge hat, daß bei durchflossenem Kugelhahn auf Grund des herrschenden Druckunterschiedes vor und hinter der Drosselblende 38 der Totraum 28 durchspült wird.

Gemäß dem in der unteren Hälfte der Figur dargestellten zweiten Ausführungsbeispiel der Erfindung ist eine Bohrung 42 konzentrisch zur Drehachse der Kugel 22 angeordnet, die an der engsten Stelle der Durchgangsöffnung 24 in die Drosselblende 38 mündet und den Totraum 28 mit der Durchgangsöffnung 24 verbindet. Diese Bohrung 42 wirkt nach Art einer Venturi-Düse bzw. eines Injektors und zieht das Medium aus dem Totraum 28 in die Durchgangsöffnung 24.

Das Gehäuse 10 ist sodann noch mit einem Spül-Entleeranschluß 44 versehen, der über Spül-Entleerbohrungen 46 an den Totraum 28 bzw. die Durchgangsöffnung 24 angeschlossen ist und über die der Raum zwischen der Kugel und dem Gehäuse im geöffneten und geschlossenen Zustand des Kugelhahns gespült und entleert wird. Durch die Entleerung kann zudem eine Frostsicherheit erzielt werden.

Während in dem dargestellten Ausführungsbeispiel die Bohrungen 40, 40' und 42 in der Kugel 22 angeordnet sind, ist es prinzipiell möglich, diese auch in das Gehäuse oder den Anschlußstutzen zu verlegen, sofern diese Bohrungen nur an den Totraum angeschlossen sind und vor und hinter einer Drosselblende enden bzw. in dem zweiten Ausführungsbeispiel die einzeln vorgesehene Bohrung in diese Drosselblende endet. Diese Drosselblende könnte sodann auch an anderer Stelle in der Durchgangsöffnung innerhalb des Gehäuses vorgesehen sein.

## Patentansprüche

1. Absperrarmatur mit einem in einem Gehäuse dichtend angeordneten Schließkörper, der in einer Stellung eine Durchgangsöffnung durch das Gehäuse freigibt und in einer weiteren Stellung die Durchgangsöffnung durch das Gehäuse absperrt, wobei sich zwischen Schließkörper und Gehäuse ein Totraum befindet, **dadurch gekennzeichnet, daß** eine Drosselblende (38) in der Durchgangsöffnung (24) angeordnet ist und daß der Totraum (28) mit der Durchgangsöffnung (24) vor und hinter der Drosselblende (38) verbunden ist.

2. Absperrarmatur mit einem in einem Gehäuse dichtend angeordneten Schließkörper, der in einer Stellung eine Durchgangsöffnung durch das Gehäuse freigibt und in einer weiteren Stellung die Durchgangsöffnung durch das Gehäuse absperrt, wobei sich zwischen Schließkörper und Gehäuse ein Totraum befindet, **dadurch gekennzeichnet, daß** in der Durchgangsöffnung (24) eine Drosselblende (38) angeordnet ist und daß der Totraum (28) mit der Durchgangsöffnung (24) an der durch die Drosselblende (38) vorgegebenen engsten Einschnürung verbunden ist.

3. Absperrarmatur nach Anspruch 1, **dadurch gekennzeichnet, daß** der Schließkörper (22) die Drosselblende (38) und zwei Bohrungen (40,40') vor und hinter der Drosselblende (38) aufweist, welche Bohrungen (40,40') den Totraum (28) mit der Durchgangsöffnung (24) verbinden.

4. Absperrarmatur nach Anspruch 2, **dadurch gekennzeichnet, daß** der Schließkörper (22) die Drosselblende (38) und eine Bohrung (42) aufweist, welche Bohrung den Totraum (28) mit dem engsten Querschnitt der Durchgangsöffnung (24) an der Drosselblende (38) verbindet.

5. Absperrarmatur nach einem der vorangehenden Ansprüche, **gekennzeichnet durch** eine in dem Gehäuse angebrachte Entleerungsbohrung (44), die über Bohrungen (46) sowohl an die Durchgangsöffnung (24) als auch an den Totraum (28) angeschlossen ist.

6. Absperrarmatur nach einem der Ansprüche 1 bis 5, **dadurch gekennzeichnet, daß** sie als Kugelhahn ausgebildet ist.

## Claims

1. Shut-off valve having a closing element which is arranged in a sealing manner in a housing and which, in one position, opens a passage opening through the housing and, in a further position, shuts off the passage opening through the housing, there being a dead space between closing element and housing, **characterized in that** a throttling orifice (38) is arranged in the passage opening (24), and **in that** the dead space (28) is connected to the passage opening (24) upstream and downstream of the throttling orifice (38).

2. Shut-off valve having a closing element which is arranged in a sealing manner in a housing and which, in one position, opens a passage opening through the housing and, in a further position, shuts off the passage opening through the housing, there being a dead space between closing element and housing, **characterized in that** a throttling orifice (38) is arranged in the passage opening (24), and **in that** the dead space (28) is connected to the passage opening (24) at the narrowest constriction predefined by the throttling orifice (38).

3. Shut-off valve according to Claim 1, **characterized in that** the closing element (22) has the throttling orifice (38) and two bores (40, 40') upstream and downstream of the throttling orifice (38), which bores (40, 40') connect the dead space (28) to the passage opening (24).

4. Shut-off valve according to Claim 2, **characterized in that** the closing element (22) has the throttling orifice (38) and a bore (42), which bore connects the dead space (28) to the narrowest cross section of the passage opening (24) at the throttling orifice (38).

5. Shut-off valve according to one of the preceding claims, **characterized by** an emptying bore (44) which is fitted in the housing and which is connected via bores (46) both to the passage opening (24) and to the dead space (28).

6. Shut-off valve according to one of Claims 1 to 5, **characterized in that** it is designed as a ball valve.

## Revendications

1. Robinet d'arrêt muni d'un corps de fermeture disposé de manière à être étanche dans un boîtier, lequel libère dans une position un orifice de passage à travers le boîtier et ferme dans une autre position l'orifice de passage à travers le boîtier, un espace mort se trouvant entre le corps de fermeture et le boîtier, **caractérisé en ce qu'**un obturateur d'étranglement (38) est disposé dans l'orifice de passage (24) et que l'espace mort (28) est relié à l'orifice de passage (24) devant et derrière l'obturateur d'étranglement (38).

2. Robinet d'arrêt muni d'un corps de fermeture disposé de manière à être étanche dans un boîtier, lequel libère dans une position un orifice de passage à travers le boîtier et ferme dans une autre position l'orifice de passage à travers le boîtier, un espace mort se trouvant entre le corps de fermeture et le boîtier, **caractérisé en ce qu'**un obturateur d'étranglement (38) est disposé dans l'orifice de passage (24) et que l'espace mort (28) est relié à l'orifice de passage (24) au niveau de la contraction la plus étroite définie par l'obturateur d'étranglement (38).

3. Robinet d'arrêt selon la revendication 1, **caractérisé en ce que** le corps de fermeture (22) présente l'obturateur d'étranglement (38) et deux orifices (40, 40') devant et derrière l'obturateur d'étranglement (38), lesquels orifices (40, 40') relient l'espace mort (28) avec l'orifice de passage (24).

4. Robinet d'arrêt selon la revendication 2, **caractérisé en ce que** le corps de fermeture (22) présente l'obturateur d'étranglement (38) et un orifice (42), lequel orifice relie l'espace mort (28) avec la section la plus petite de l'orifice de passage (24) à l'obturateur d'étranglement (38).

5. Robinet d'arrêt selon l'une des revendications précédentes, **caractérisé par** un orifice de vidange (44) intégré dans le boîtier, lequel est relié par des trous (46) à la fois à l'orifice de passage (24) et à l'espace mort (28).

6. Robinet d'arrêt selon l'une des revendications 1 à 5, **caractérisé en ce qu'**il est réalisé sous la forme d'un robinet à boisseau sphérique.
